(19) Europäisches Patentamt
European Patent Office
Office européen des brevets

(11) **EP 3 949 304 B1**

(12) **EUROPEAN PATENT SPECIFICATION**

(45) Date of publication and mention of the grant of the patent:
**08.11.2023 Bulletin 2023/45**

(21) Application number: **19715454.5**

(22) Date of filing: **01.04.2019**

(51) International Patent Classification (IPC):
*G06F 3/01* *(2006.01)*  *G06F 3/0481* *(2022.01)*
*G06F 3/14* *(2006.01)*  *H04L 65/403* *(2022.01)*
*G06F 3/04812* *(2022.01)*

(52) Cooperative Patent Classification (CPC):
**H04L 65/403; G06F 3/04812; G06F 3/1454;**
G09G 2354/00

(86) International application number:
**PCT/EP2019/058205**

(87) International publication number:
**WO 2020/200420 (08.10.2020 Gazette 2020/41)**

(54) **COMPUTER-IMPLEMENTED METHODS OF RUNNING A VIRTUAL REAL-TIME COLLABORATION SESSION AND WEB COLLABORATION SYSTEM FOR REVIEWING A DOCUMENT IN A VIRTUAL REAL-TIME COLLABORATION SESSION**

COMPUTERIMPLEMENTIERTE VERFAHREN ZUR DURCHFÜHRUNG EINER VIRTUELLEN ECHTZEIT-KOLLABORATIONSSITZUNG UND WEB-KOLLABORATIONSSYSTEM ZUR ÜBERPRÜFUNG EINES DOKUMENTS IN EINER VIRTUELLEN ECHTZEIT-KOLLABORATIONSSITZUNG

PROCÉDÉS MIS EN OEUVRE PAR ORDINATEUR POUR EXÉCUTER UNE SESSION DE COLLABORATION EN TEMPS RÉEL VIRTUELLE ET SYSTÈME DE COLLABORATION WEB POUR EXAMINER UN DOCUMENT DANS UNE SESSION DE COLLABORATION EN TEMPS RÉEL VIRTUELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.02.2022 Bulletin 2022/06**

(73) Proprietor: **Unify Patente GmbH & Co. KG**
**81739 München (DE)**

(72) Inventors:
• **PAPPAS, Lampros**
**142 31 Athens (GR)**
• **GIATILIS, Vasileios**
**17561 Palaio Faliro (GR)**

(74) Representative: **Schaafhausen Patentanwälte PartGmbB**
**Prinzregentenplatz 15**
**81675 München (DE)**

(56) References cited:
**US-A1- 2015 346 937    US-A1- 2016 018 888**

EP 3 949 304 B1

**Description**

The present invention relates to computer-implemented methods of running a virtual real-time collaboration session as well as to a system for reviewing a document in a virtual real-time collaboration session.

Further, in prior art, many services in the applications domain are known that provide document collaboration environments and platforms by means of which web collaboration sessions may be held with a predetermined number of users participating in such a session so as to collaborate via a communications network, e.g., in order to review a document.

US 2016/018888 A1 describes methods, systems and computer readable storage media for indicating eye tracking information during a real-time communication session.

US 2015/346937 A1 describes a collaboration system comprising one or more servers configured to interface with a plurality of user devices. A receiver node is configured to receive a reading position information for each user being online and reading the same post.

However, with respect to such a web collaboration session, whenever a document review is conducted, there are certain problems that arise from the fact that the moderator or the reader is the one that controls the session in total. One of these problems is the fact that the remote users or participants would like to have some interactivity with the document under review in real time. Basically, one major concern is that every reviewer or user participating in the virtual review collaboration session would like to read the content of the document to be reviewed, e.g., individual sentences or passages of the latter, at his or her own reading pace. Also, some of the reviewers or users may want to make personal notes during the review process for later use, or just go back to a certain passage and read it again, for example, in cases he or she has not understood it well enough or the like.

Also, during a review session, a participant might want to read a passage of the document to be reviewed by moving the mouse pointer in parallel with the sentence, so as to not lose the text line while reading. This, in fact, is a technique that many people are using during reading that helps them read faster and more focused. However, during a web collaboration session this is kind of reading or following a text on a display might be difficult, since the moderator of the collaboration session usually shifts the content of the document to be reviewed by scrolling the pages up or down or by moving a page to the left or to the right. In such cases, the reviewer reading the document will lose whatever he or she was focused on in the text.

Most of the above mentioned issues for working on a document to be reviewed, however, only can be resolved in cases in which the users or reviewers are reading the document to be reviewed offline and cross-match it with the corresponding document which is online.

Therefore, the present invention is based on the object to overcome the drawbacks in existing collaboration systems and sessions for reviewing a document as outlined above. In particular, the present invention is based on the object to provide computer-implemented methods and a corresponding web collaboration system according to which every single user or reviewer participating in a web collaboration for reviewing a document are able to read the document or content of the document at their own pace and the moderator of the collaboration session is able to adapt the displayed content of the document to be reviewed to the requirements of the participants.

The subject-matter of the invention is defined in the independent claims. Preferred embodiments of the invention are defined in the respective dependent claims.

According to the present invention, a computer-implemented method of running a virtual real-time collaboration session with at least one participant reviewing a document to be reviewed at a first client and a moderator providing content of the document to be reviewed at a second client is provided wherein the first and second clients are connected to each other via a communication network, and wherein the method comprises the steps of displaying, at a first display device connected to or comprised in the first client, first content of the document to be reviewed; detecting, by a detection means connected to or comprised in the first client, the reading pace of the at least one participant in the first content of the document to be reviewed; transmitting an information relating to the detected reading pace from the first client to the second client via the communication network, wherein the information is displayed at a second display device connected to or comprised in the second client, characterized in that the method further comprises a step of calculating a value for a review attention loss representing the reading pace of the at least one participant, wherein the review attention loss is calculated according to a formula

$$RAL = \frac{\sum_{n=0}^{x} Actual\ Review\ Percentage - Participant\ Review\ Percentage}{x}$$

wherein RAL is an indicator that indicates at which level the at least one participant is able to follow the reviewing process pace and x is a number of participants lagging behind in the review process.

By means of the inventive method, the participant of the web collaboration session for reviewing a document is able to read the document independently of the moderator's action (e.g., scrolling content of the document up and down or to the left and to the right), and also without however losing track of the review progress.

According to a preferred embodiment, the method further comprises a step of receiving, at the first display device, second content of the document to be reviewed which shows the progress of the review process at the second display device.

According to another preferred embodiment, the method further comprises a step of receiving, at the second display device, the content of the document to be reviewed, which shows the progress of the review process at the first display device.

According to a further preferred embodiment, the step of detecting the reading pace of the at least one participant comprises a step of tracking the eye movement of the at least one participant reviewing the document to be reviewed.

Advantageously, the step of detecting the reading pace of the at least one participant further comprises a step of tracking the mouse position or movement on the first display device of a mouse connected to the first client and used by the at least one participant for following words of the document to be reviewed which the at least participant is currently reading.

Moreover, it is preferable, if a position of the mouse, when used by the at least one participant for following the words, is indicated as a pencil icon on the first display device, the pencil icon indicating, to the at least one participant, a reviewing or reading mode, in which the at least one participant is reviewing or reading the document to be reviewed.

According to still a further preferred embodiment, in the reviewing or reading mode, the screen showing the first content of the document to be reviewed is frozen at the first display device.

Further, the first content may be a first page or at least a portion of the first page of the document to be reviewed, wherein the frozen screen may show a snapshot of the first page or of at least a portion of the first page and a second page of the document to be reviewed. It also is advantageous, if the method further comprises a step of receiving, at the first client, information on the progress of the review process on the moderator side.

Also, a computer-implemented method of running a virtual real-time collaboration session with at least one participant reviewing a document to be reviewed at a first client and a moderator providing content of the document to be reviewed at a second client is provided wherein the first and second clients are connected to each other via a communication network, wherein the method comprises the steps of displaying, at a second display device connected to or comprised in the second client, first content of the document to be reviewed; receiving and displaying, at the second client, from the first client via the communication network, an information relating to a detected reading pace of the first content of the at least one participant reviewing the document to be reviewed, and adapting the content of the document to be displayed and reviewed at the first client to the reading pace on the basis of the information received, characterized in that the method further comprises the step of calculating a value for a review attention loss representing the reading pace of the at least one participant, wherein the review attention loss is calculated according to a formula

$$RAL = \frac{\sum_{n=0}^{x} Actual\ Review\ Percentage - Participant\ Review\ Percentage}{x}$$

wherein RAL is an indicator that indicates at which level the at least one participant is able to follow the reviewing process pace and x is a number of participants lagging behind in the review process.

Moreover, a web collaboration system for reviewing a document in a virtual real-time collaboration session according to the methods described above is provided, wherein at least one first client is provided with a first display device for displaying content of the document to be reviewed to a first participant, and a second client is provided for presenting the document to be reviewed by a moderator of the collaboration session, the first and second clients being connected to each other via a communication network, wherein the system calculates a review attention loss, RAL, percentage on the basis of the following formula

$$RAL = \frac{\sum_{n=0}^{x} Actual\ Review\ Percentage - Participant\ Review\ Percentage}{x}$$

wherein RAL is an indicator that indicates at which level the at least one participant is able to follow the reviewing process pace and x is a number of participants lagging behind in the review process.

According to a preferred embodiment, the system comprises a reading pace detector, in particular, eye tracking means. Thus, according to the present invention, no matter how the moderator of the web collaboration session for reviewing a document or the presenter of the document progresses with the review process, the participants are able to follow the content of the document to be reviewed undistractedly, line by line, sentence by sentence at their own reading pace, respectively. Since there are no preset or arbitrary time limits for the participant to be ready with reading, e.g., a page of the presented document, he or she will be able to also take notes on the content or text read and the like. Also, the present invention allows the participants to move around in the content of the document to be reviewed, and also allows the moderator to recognize whether he or she reads too fast so that he or she is able to adapt this speed to the participants pace of reading. Thus, summarizing the above, the inventive methods and collaboration system provide a very flexible and efficient tool for reviewing a document in a read-time web collaboration session.

Also, according to the methods and system described above, when the user or participant of a web collaboration session tries to read a sentence and moves the mouse, the system detects this and correlates it to the document movement. Also, the system may track the reading pace by means of eye tracking. The parallel movement of the mouse to a sentence or the eye movement is detected and is correlated to the participant's reading pace so that this information may be made available to the moderator of the collaboration session in order to, for example, enable him or her to adapt the review process pace or the presentation pace of the document.

The invention and embodiments thereof will be described below in further detail in connection with the drawing.

Fig. 1A, Fig. 1B, Fig. 1C respectively show a screenshot of a screen of a participant in a real-time collaboration session;

Fig. 2 shows a flow chart of a review process according to an embodiment; and

Fig. 3 shows a moderator screen during a real-time web collaboration for reviewing a document.

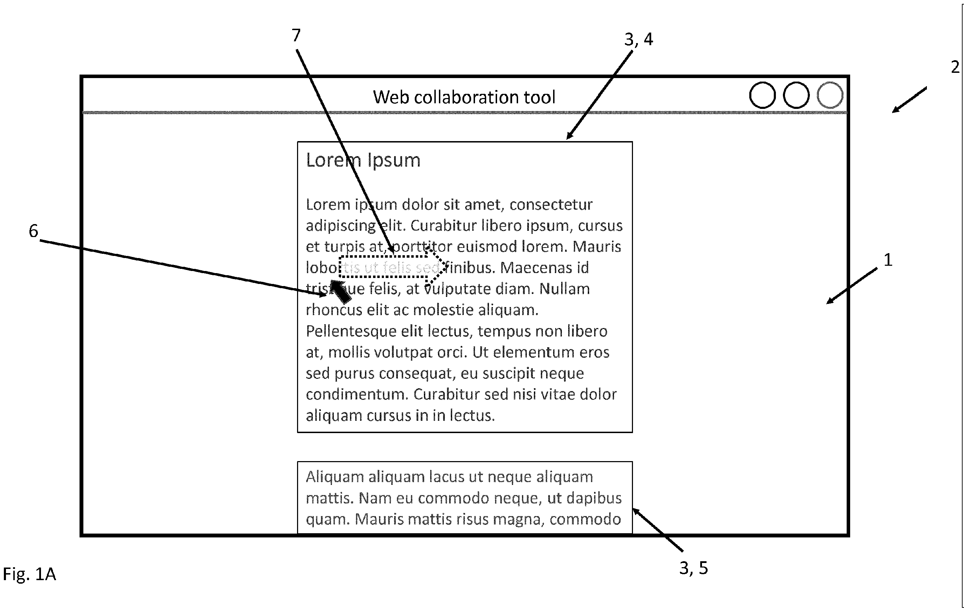

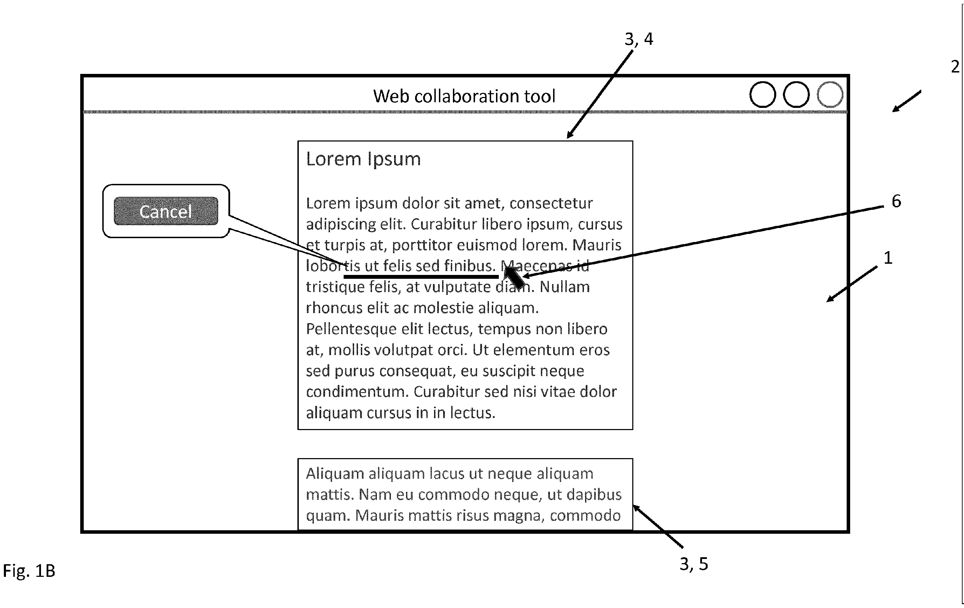

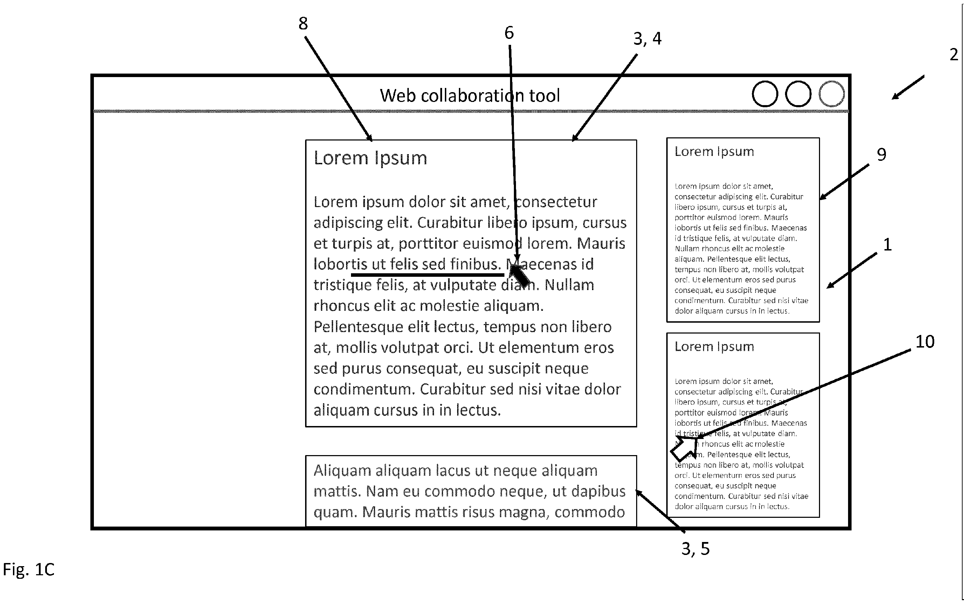

Fig. 1A, Fig. 1B, and Fig. 1C respectively show a screen 1 of a display 2 connected to or comprised in a second client connected, via a communication network, e.g., to a web collaboration server (not shown). Also connected to the web collaboration server, via the communication network, may be a plurality of other second clients which are assigned to or used by other participants in a web collaboration session. Further, a first client (not shown) is connected to the web collaboration server, which is assigned to or used by a moderator of the web collaboration session. The moderator, working at the first client, presents a document to be reviewed 3 to the other participants via the communication network. For example, the moderator presents a first page 4 of the document to be reviewed 3 and part of a second page 5 of the document to be reviewed 3 on his screen, which is shared, via the web collaboration server, with the participants of the real-time web collaboration session for reviewing the document. Thus, the other participants, or at least one participant of the web collaboration session who is working at one of the second clients, is able to see at his display 2 the screen shared by the moderator. In the embodiment shown here, the first page 4 and the part of the second page 5 are referred to as first content 8.

In Fig. 1A, a white arrow 7 can be seen that indicates the movement of the mouse or mouse pointer 6, indicated by the black arrow. The black arrow, here, indicates the starting point of the movement of the mouse pointer 6. Thus, this indicates that a participant of the web collaboration session has started reading the document to be reviewed 3 according to the movement of the mouse.

Further, as it can be seen in Fig. 1A, when the participant or reviewer tries to read a sentence and moves the mouse pointer 6 accordingly on the screen 1, as mentioned above and indicated by black arrow, the parallel movement to the sentence is detected by the participant's system or client, and as long as this movement is detected, it is presented on his or her screen 1.

In Fig. 1B, it can be seen that part of a sentence is underlined and the mouse pointer 6 is pointing to the end of the line in the text. This indicates that the web collaboration system or the second client has identified that reading is going on, and will put the second client in the so-called reading or reviewing mode or freeze mode, in which the reviewer or participant may read the first content independently of the moderator's reading pace. However, the freeze mode may be canceled if the reviewer or participant realizes that it was activated by mistake or if he/she realizes that the moderator has proceeded further along and wishes to have again the same view as the moderator. During the reading or freeze mode, a snapshot of the document to be reviewed 3 is frozen, thus, showing a still screen.

Beatification graphical user interface items can be bound to this action, such as faded lines underlying each sentence, replacing the mouse pointer with a pencil icon, etc. These may indicate to the user that she or he is in reading or reviewing mode.

However, as the review process is going on under the control of the moderator, the participant may recognize that he might be losing information and may cancel this mode again, as mentioned above. When the cancellation procedure is completed, the participant is taken directly to the actual screen (of the moderator) and thus, he or she is able to see the progress of the review. Alternatively, there may also be an option to bookmark the reading progress for future reference.

At this state, there are two important states and information triggers.

1. The moderator is being informed that the participant is reading a point in the document, while she or he can be informed at any time in which state is the participant (in other words what is the reading progress of the participant).

2. The participant is being informed about the progress of the review. Therefore she or he may be informed anytime how far the review process has progressed, and thus, if she or he lags far behind the progress.

However, due to the reading or reviewing mode, the user is able to read the document independently of the moderator's action and progress within the text of the document to be reviewed, and without losing track of the review progress.

In Fig. 1C, the screen of the display 2 comprises the first content 8, namely, the first page 4 of the document to be reviewed 3 and part of the second page 5. Since the moderator has now already progressed with the document review, namely, to the lower part of the second page 5 which cannot be seen on the screen 1 or rather on the frozen image of it, namely, the screenshot, this is presented on the screen 1 of the display 2 to the participant or reviewer as second content 9. Here, in this embodiment, the second content 9 is arranged on the right hand side of the screen and it comprises the entire first and second pages 4, 5 of the document to be reviewed 3 as a scaled-down version, in which a further white arrow 10 indicates the progress of reading or reviewing the document on the moderator's side.

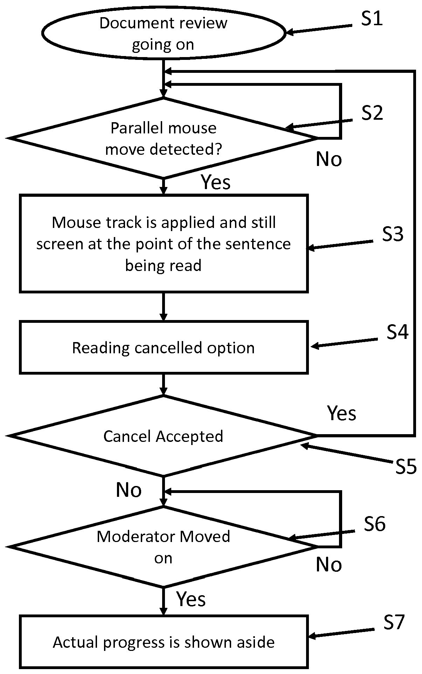

Fig. 2 shows a flow chart of a review process in a real-time web collaboration session according to an embodiment. As already mentioned above, during a review session in which a moderator presents a document to be reviewed on his or her screen which is shared, via a communication network and a web collaboration server, with at least one or a plurality of participants or reviewers, the latter may read the document to be reviewed (see Fig. 1A) by moving the mouse pointer in parallel with the sentence, since this is a technique that enables people to read faster and also more focused. Accordingly, in the method described here, in a first step S 1, it is decided whether a document review process is going on. Then, if it is detected that the review process is going on, in a second step S2, it is detected, whether there is parallel mouse movement to the text read. If this is positive, then in a third step S3, a screenshot is created and the system is put in the reading or reviewing mode. In a fourth step S4, a cancelling of the reading or reviewing mode is offered to the participant. If the participant decides to cancel the reading or reviewing mode, then in a fifth step S5, it is decided whether the cancelling of the mode has been accepted, and then in the subsequent step S6, it is determined, if the moderator of the collaboration session has already moved on, namely, if the moderator is already reading in a part of the text of the document to be reviewed which is not included and presented in the participants still image, the screenshot. If the review process, on the moderator's side, has already progressed further than displayed in the participant's screenshot, then the actual progress is presented, in step S7, as second content on the participant's screen, as outlined above with respect to Fig. 1C.

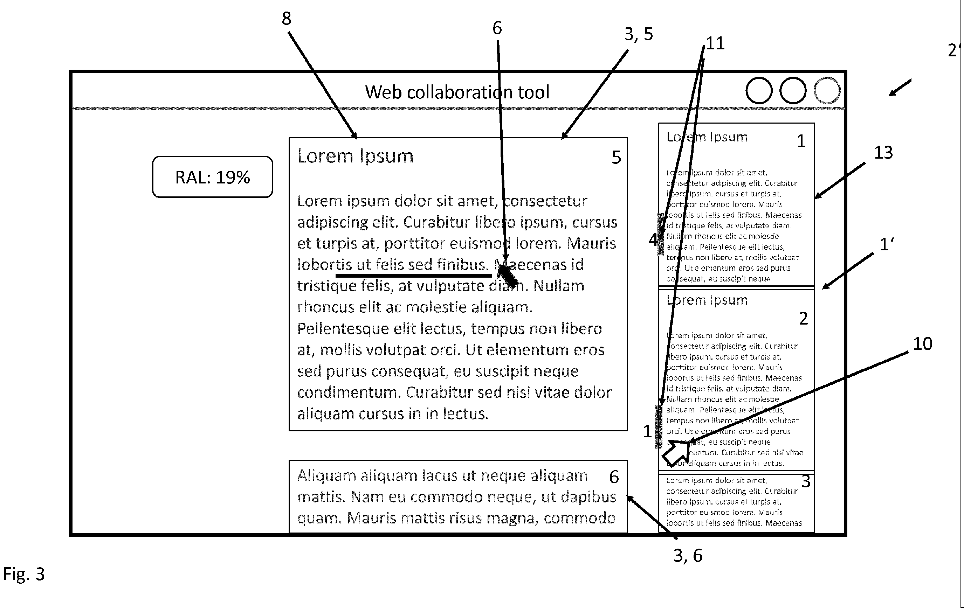

Fig. 3 shows a moderator screen 1' of a second display device 2' connected to or comprised in a second client used by the moderator during a real-time web collaboration session for reviewing a document 3. A so-called scaling feature will be described in connection with this embodiment.

As can be seen, the screen 1' of the moderator's client shows text of the document to be reviewed 3, with a page 5 and part of the following page 6, representing the progress of the review process on the moderator's side. This information is shown in the middle or central part of the screen 1. On the right hand side of the screen, there are several down-scaled pages 11 of the document to be reviewed 3, namely, the preceding pages 1, 2, and part of page 3, referred to as third content 13. The down-scaled pages 11 are marked with black bars 12 which indicate the progress of the review process on the participant's side. Namely, at the uppermost down-scaled page 11, which is page 1 of the document to be reviewed 3, the bar 12 on the lower left hand side of the text is marked with the number"4", meaning four participants are still reading this passage indicated by the black bar 12. Further, in the down-scaled page 11 below page 1, which is page 2 of the document to be reviewed 3, another black bar 12 is marked with the number "1", indicating that one participant is reading that passage, and so on.

Also, on the left hand side of the main text, which the moderator is currently reading, a value: "RAL: 19%" is indicated. This means that the actual review status is missing by 19%. As explained above, this refers to four participants still reading page 1, and one participant still reading page 2. This provides the information to the moderator that the review process has not progressed quite well on the participants' side, and specifically, it seems that problems with the text occurred at page 1, since four participants are still occupied with reading a passage there.

On the basis of this display, as outlined above, the moderator always is aware of when a participant lags behind, still reading a certain topic on previous pages.

The scaling feature mentioned above and the scaling procedure, respectively, will now be explained in further detail. Namely, if there is a number of n participants involved in the document review session, and a number of x participants is lagging behind in the review process as controlled by the moderator, then the web collaboration system may calculate a so-called 'Review Attention Loss' percentage (RAL) on the basis of the following formula:

$$RAL = \frac{\sum_{n=0}^{x} Actual\ Review\ Percentage - Participant\ Review\ Percentage}{x}$$

wherein RAL is an indicator that reveals at which level the participants are willing or able to follow on what is being said in the document review (on the moderator's side or by the moderator). Hence, if RAL is high, the moderator may reconsider the process and may get back to those passages with which a majority of the participants had problems to understand, for example, what the intended meaning of it actually is. In contrast, if RAL is low, then the moderator knows that the review is going well.

Coming back to the qualitative aspect of the review as outlined above, the moderator also has the opportunity to see which passages of the document to be reviewed are not very well comprehended so as to get back to these passages or to take this information as a bookmark to return to at the end of the review.

As mentioned above, the entire procedure and all features of the system and methods described in connection with using mouse tracking for the detection of the passages a reviewer is currently reading, are applicable to a system and methods using eye tracking for the detection of the passages a reviewer is currently reading.

Reference numerals

| | |
|---|---|
| 1, 1' | screen |
| 2, 2' | display |
| 3 | document to be reviewed |
| 4 | first page of the document to be reviewed |
| 5 | second page of the document to be reviewed |
| 6 | mouse pointer |
| 7 | white arrow |
| 8 | first content |
| 9 | second content |
| 10 | further white arrow |
| 11 | down-scaled pages |
| 12 | bars |
| 13 | third content |

## Claims

1. Computer-implemented method of running a virtual real-time collaboration session with at least one participant reviewing a document to be reviewed (3) at a first client and a moderator providing content of the document to be reviewed (3) at a second client, the first and second clients being connected to each other via a communication network, wherein the method comprises the steps of

   - displaying, at a first display device (2) connected to or comprised in the first client, first content (8) of the document to be reviewed (3);
   - detecting, by a detection means connected to or comprised in the first client, the reading pace of the at least one participant in the first content (8) of the document to be reviewed (3);
   - transmitting an information relating to the detected reading pace from the first client to the second client via the communication network, wherein the information is displayed at a second display device (2') connected to or comprised in the second client, **characterized in that** the method further comprises a step of
   - calculating a value for a review attention loss representing the reading pace of the at least one participant, wherein the review attention loss is calculated according to a formula

   $$RAL = \frac{\sum_{n=0}^{x} Actual\ Review\ Percentage - Participant\ Review\ Percentage}{x}$$

   wherein RAL is an indicator that indicates at which level the at least one participant is able to follow the reviewing process pace and x is a number of participants lagging behind in the review process.

2. Computer-implemented method according to claim 1, further comprising a step of receiving, at the first display device (2), second content (9) of the document to be reviewed (3), which shows the progress of the review process at the second display device (2').

3. Computer-implemented method according to claim 1 or claim 2, further comprising a step of receiving, at the second display device (2'), third content (13) of the document to be reviewed (3), which shows the progress of the review process at the first display device (2).

4. Computer-implemented method according to any one of claims 1 to 3, wherein the step of detecting the reading pace of the at least one participant comprises a step of tracking the eye movement of the at least one participant reviewing the document to be reviewed (3).

5. Computer-implemented method according to any one of claims 1 to 4, wherein the step of detecting the reading pace of the at least one participant further comprises a step of tracking the mouse position or movement on the first display device (2) of a mouse connected to the first client and used by the at least one participant for following words of the document to be reviewed (3), which the at least participant is currently reading.

6. Computer-implemented method according to claim 5, wherein a position of the mouse, when used by the at least one participant for following the words, is indicated as a pencil icon on the first display device (2), the pencil icon indicating, to the at least one participant, a reviewing or reading mode, in which the at least one participant is reviewing or reading the document to be reviewed (3).

7. Computer-implemented method according to claim 6, wherein in the reviewing or reading mode, the screen (1) showing the first content (8) of the document to be reviewed (3) is frozen at the first display device (2).

8. Computer-implemented method according to claim 7, wherein the first content (8) is a first page (4) or at least a portion of the first page (4) of the document to be reviewed (3), wherein the frozen screen shows a snapshot of the first page (4) or of at least a portion of the first page (4) and a second page (5) of the document to be reviewed (3).

9. Computer-implemented method according to any one of the preceding claims, wherein the method further comprises a step of receiving, at the first client, information on the progress of the review process on the moderator side.

10. Computer-implemented method of running a virtual real-time collaboration session with at least one participant reviewing a document to be reviewed (3) at a first client and a moderator providing content of the document to be reviewed (3) at a second client, the first and second clients being connected to each other via a communication network, wherein the method comprises the steps of

- displaying, at a second display device (2') connected to or comprised in the second client, first content (8) of the document to be reviewed (3);
- receiving and displaying, at the second client, from the first client via the communication network, an information relating to a detected reading pace of the first content (8) of the at least one participant reviewing the document to be reviewed (3), and
- adapting the content of the document to be displayed and reviewed (3) at the first client to the reading pace on the basis of the information received,

**characterized in that** the method further comprises a step of

- calculating a value for a review attention loss representing the reading pace of the at least one participant, wherein the review attention loss is calculated according to a formula

$$RAL = \frac{\sum_{n=0}^{x} Actual\ Review\ Percentage - Participant\ Review\ Percentage}{x}$$

wherein RAL is an indicator that indicates at which level the at least one participant is able to follow the reviewing process pace and x is a number of participants lagging behind in the review process.

11. Web collaboration system for reviewing a document (3) in a virtual real-time collaboration session according to any one of the preceding claims, wherein at least one first client is provided with a first display device (2) for displaying content of the document to be reviewed (3) to a first participant, and a second client is provided for presenting the document to be reviewed (3) by a moderator of the collaboration session, the first and second clients being connected to each other via a communication network, wherein the system calculates a review attention loss (RAL) percentage on the basis of the following formula

$$RAL = \frac{\sum_{n=0}^{x} Actual\ Review\ Percentage - Participant\ Review\ Percentage}{x}$$

wherein RAL is an indicator that indicates at which level the at least one participant is able to follow the reviewing process pace and x is a number of participants lagging behind in the review process.

12. Web collaboration system according to claim 11, wherein the system comprises a reading pace detector, in particular, eye tracking means.

**Patentansprüche**

1. Computerimplementiertes Verfahren zur Durchführung einer virtuellen Echtzeit-Kollaborationssitzung mit mindestens einem Teilnehmer, der ein zu prüfendes Dokument (3) an einem ersten Client prüft, und einem Moderator, der den Inhalt des zu prüfenden Dokuments (3) an einem zweiten Client bereitstellt, wobei der erste und der zweite Client über ein Kommunikationsnetzwerk miteinander verbunden sind, wobei das Verfahren die folgenden Schritte umfasst

- Anzeigen eines ersten Inhalts (8) des zu prüfenden Dokuments (3) auf einer ersten Anzeigevorrichtung (2), die mit dem ersten Client verbunden oder darin enthalten ist;
- Erfassen der Lesegeschwindigkeit des mindestens einen Teilnehmers im ersten Inhalt (8) des zu prüfenden Dokuments (3) durch ein mit dem ersten Client verbundenes oder in diesem enthaltenes Erfassungsmittel;
- Übertragen einer Information, die sich auf das erfasste Lesetempo bezieht, von dem ersten Client zu dem zweiten Client über das Kommunikationsnetzwerk, wobei die Information auf einer zweiten Anzeigevorrichtung (2') angezeigt wird, die mit dem zweiten Client verbunden oder in diesem enthalten ist,

**dadurch gekennzeichnet, dass** das Verfahren ferner einen Schritt umfasst, bei dem

- Berechnen eines Wertes für einen Aufmerksamkeitsverlust bei der Überprüfung, der das Lesetempo des mindestens einen Teilnehmers darstellt, wobei der Aufmerksamkeitsverlust bei der Überprüfung gemäß einer Formel berechnet wird

$$RAL = \frac{\sum_{n=0}^{x} Tatsächlicher\ Überprüfungsprozentsatz - Teilnehmer\text{-}Überprüfungsprozentsatz}{x}$$

wobei RAL ein Indikator ist, der angibt, auf welchem Niveau der mindestens eine Teilnehmer in der Lage ist, dem Tempo des Überprüfungsprozesses zu folgen, und x eine Anzahl von Teilnehmern ist, die im Überprüfungsprozess zurückbleiben.

2. Computerimplementiertes Verfahren nach Anspruch 1, das ferner einen Schritt des Empfangens eines zweiten Inhalts (9) des zu prüfenden Dokuments (3) an der ersten Anzeigevorrichtung (2) umfasst, der den Fortschritt des Überprüfungsprozesses auf der zweiten Anzeigevorrichtung (2') anzeigt.

3. Computerimplementiertes Verfahren nach Anspruch 1 oder Anspruch 2, das ferner einen Schritt umfasst, bei dem an der zweiten Anzeigevorrichtung (2') ein dritter Inhalt (13) des zu prüfenden Dokuments (3) empfangen wird, der den Fortschritt des Überprüfungsprozesses auf der ersten Anzeigevorrichtung (2) anzeigt.

4. Computerimplementiertes Verfahren nach einem der Ansprüche 1 bis 3, wobei der Schritt des Erfassens des Lesetempos des mindestens einen Teilnehmers einen Schritt des Verfolgens der Augenbewegung des mindestens einen Teilnehmers, der das zu prüfende Dokument prüft, umfasst (3).

5. Computerimplementiertes Verfahren nach einem der Ansprüche 1 bis 4, wobei der Schritt des Erfassens des Lesetempos des mindestens einen Teilnehmers ferner einen Schritt des Verfolgens der Mausposition oder -bewegung auf dem ersten Anzeigegerät (2) einer Maus umfasst, die mit dem ersten Client verbunden ist und von dem mindestens einen Teilnehmer zum Verfolgen von Wörtern des zu prüfenden Dokuments (3) verwendet wird, das der mindestens eine Teilnehmer gerade liest.

6. Computerimplementiertes Verfahren nach Anspruch 5, wobei eine Position der Maus, wenn sie von dem mindestens einen Teilnehmer zum Verfolgen der Wörter verwendet wird, als Stiftsymbol auf der ersten Anzeigevorrichtung (2) angezeigt wird, wobei das Stiftsymbol dem mindestens einen Teilnehmer einen Überprüfungs- oder Lesemodus anzeigt, in dem der mindestens eine Teilnehmer das zu prüfende Dokument (3) überprüft oder liest.

7. Computerimplementiertes Verfahren nach Anspruch 6, wobei im Überprüfungs- oder Lesemodus der Bildschirm (1), der den ersten Inhalt (8) des zu prüfenden Dokuments (3) zeigt, an der ersten Anzeigevorrichtung (2) eingefroren ist.

8. Computerimplementiertes Verfahren nach Anspruch 7, wobei der erste Inhalt (8) eine erste Seite (4) oder zumindest ein Teil der ersten Seite (4) des zu prüfenden Dokuments (3) ist, wobei der eingefrorene Bildschirm einen Snapshot der ersten Seite (4) oder zumindest eines Teils der ersten Seite (4) und einer zweiten Seite (5) des zu prüfenden Dokuments (3) zeigt.

9. Computerimplementiertes Verfahren nach einem der vorhergehenden Ansprüche, wobei das Verfahren ferner einen Schritt des Empfangens von Informationen über den Fortschritt des Überprüfungsprozesses auf der Seite des Moderators am ersten Client umfasst.

10. Computerimplementiertes Verfahren zur Durchführung einer virtuellen Echtzeit-Kollaborationssitzung mit mindestens einem Teilnehmer, der ein zu prüfendes Dokument (3) an einem ersten Client prüft, und einem Moderator, der den Inhalt des zu prüfenden Dokuments (3) an einem zweiten Client bereitstellt, wobei der erste und der zweite Client über ein Kommunikationsnetzwerk miteinander verbunden sind, wobei das Verfahren die folgenden Schritte umfasst

- Anzeigen eines ersten Inhalts (8) des zu prüfenden Dokuments (3) auf einer zweiten Anzeigevorrichtung (2'), die mit dem zweiten Client verbunden oder in diesem enthalten ist;
- Empfangen und Anzeigen einer Information vom ersten Client über das Kommunikationsnetz auf dem zweiten Client, die sich auf ein erfasstes Lesetempo des ersten Inhalts (8) des mindestens einen Teilnehmers bezieht, der das zu prüfende Dokument (3) prüft, und
- Anpassen des Inhalts des anzuzeigenden und zu prüfenden Dokuments (3) auf dem ersten Client an das Lesetempo auf der Grundlage der empfangenen Informationen,

**dadurch gekennzeichnet, dass** das Verfahren ferner einen Schritt umfasst, bei dem

- Berechnen eines Wertes für einen Aufmerksamkeitsverlust bei der Überprüfung, der das Lesetempo des mindestens einen Teilnehmers darstellt, wobei der Aufmerksamkeitsverlust bei der Überprüfung gemäß einer Formel berechnet wird

$$RAL = \frac{\sum_{n=0}^{x} Tats\ddot{a}chlicher~\ddot{U}berpr\ddot{u}fungsprozentsatz - Teilnehmer\text{-}\ddot{U}berpr\ddot{u}fungsprozentsatz}{x}$$

wobei RAL ein Indikator ist, der angibt, auf welchem Niveau der mindestens eine Teilnehmer in der Lage ist, dem Tempo des Überprüfungsprozesses zu folgen, und x eine Anzahl von Teilnehmern ist, die im Überprüfungsprozess zurückbleiben.

11. Web-Kollaborationssystem zur Überprüfung eines Dokuments (3) in einer virtuellen Echtzeit-Kollaborationssitzung nach einem der vorhergehenden Ansprüche, wobei mindestens ein erster Client mit einer ersten Anzeigevorrichtung (2) zur Anzeige des Inhalts des zu prüfenden Dokuments (3) für einen ersten Teilnehmer und ein zweiter Client zur Präsentation des zu prüfenden Dokuments (3) durch einen Moderator der Kollaborationssitzung vorgesehen ist, wobei der erste und der zweite Client über ein Kommunikationsnetzwerk miteinander verbunden sind, wobei das System einen Prozentsatz für den Aufmerksamkeitsverlust bei der Überprüfung (RAL) auf der Grundlage der folgenden Formel berechnet

$$RAL = \frac{\Sigma_{n=0}^{x} \text{Tatsächlicher Überprüfungsprozentsatz} - \text{Teilnehmer-Überprüfungsprozentsatz}}{x}$$

wobei RAL ein Indikator ist, der angibt, auf welchem Niveau der mindestens eine Teilnehmer in der Lage ist, dem Tempo des Überprüfungsprozesses zu folgen, und x die Anzahl der Teilnehmer ist, die im Überprüfungsprozess zurückliegen.

**12.** Web-Kollaborationssystem nach Anspruch 11, wobei das System einen Lesetempodetektor, insbesondere ein Erfassungsmittel zur Augenverfolgung, umfasst.

**Revendications**

**1.** Procédé informatisé permettant d'organiser une session de collaboration virtuelle en temps réel avec au moins un participant vérifiant un document à vérifier (3) sur un premier client et un modérateur fournissant le contenu du document à vérifier (3) sur un second client, les premier et second clients étant connectés l'un à l'autre via un réseau de communication, le procédé comprenant les étapes suivantes :

- afficher, sur un premier dispositif d'affichage (2) connecté au premier client ou compris dans celui-ci, un premier contenu (8) du document à vérifier (3) ;
- détecter, par un moyen de détection connecté au premier client ou inclus dans celui-ci, le rythme de lecture de l'au moins un participant dans le premier contenu (8) du document à vérifier (3) ;
- transmettre, via le réseau de communication, une information relative au rythme de lecture détecté du premier client au second client, l'information étant affichée sur un second dispositif d'affichage (2') connecté au second client ou intégré à celui-ci,

**caractérisé en ce que** le procédé comprend également une étape consistant à

- calculer une valeur pour une perte d'attention de vérification représentant le rythme de lecture de l'au moins un participant, la perte d'attention de vérification étant calculée selon une formule

$$RAL = \frac{\Sigma_{n=0}^{x} \text{Pourcentage de vérification effective} - \text{Pourcentage de vérification du participant}}{x}$$

RAL étant un indicateur qui indique à quel niveau le au moins un participant est capable de suivre le rythme du processus de vérification et x étant un nombre de participants en retard dans le processus de vérification.

**2.** Procédé informatisé selon la revendication 1, comprenant également une étape de réception, sur le premier dispositif d'affichage (2), d'un second contenu (9) du document à vérifier (3), qui montre la progression du processus de vérification sur le second dispositif d'affichage (2').

**3.** Procédé informatisé selon la revendication 1 ou la revendication 2, comprenant également une étape de réception, sur le deuxième dispositif d'affichage (2'), d'un troisième contenu (13) du document à vérifier (3), qui montre l'avancement du processus de vérification sur le premier dispositif d'affichage (2).

**4.** Procédé informatisé selon l'une des revendications 1 à 3, dans lequel l'étape de détection du rythme de lecture de l'au moins un participant comprend une étape de suivi du mouvement des yeux de l'au moins un participant vérifiant le document à vérifier (3).

**5.** Procédé informatisé selon l'une des revendications 1 à 4, dans lequel l'étape de détection du rythme de lecture de l'au moins un participant comprend également une étape de suivi sur le premier dispositif d'affichage (2) de la position ou du mouvement d'une souris connectée au premier client et utilisée par l'au moins un participant pour suivre les mots du document à vérifier (3) que le participant est en train de lire.

**6.** Procédé informatisé selon la revendication 5, dans lequel une position de la souris, lorsqu'elle est utilisée par l'au moins un participant pour suivre les mots, est indiquée sous forme d'une icône de crayon sur le premier dispositif d'affichage (2), l'icône de crayon indiquant à l'au moins un participant un mode de vérification ou de lecture dans lequel l'au moins un participant est en train de vérifier ou de lire le document à vérifier (3).

7. Procédé informatisé selon la revendication 6, dans lequel, en mode de vérification ou de lecture, l'écran (1) montrant le premier contenu (8) du document à vérifier (3) est figé sur le premier dispositif d'affichage (2).

8. Procédé informatisé selon la revendication 7, dans lequel le premier contenu (8) est une première page (4) ou au moins une partie de la première page (4) du document à vérifier (3), dans lequel l'écran figé montre un cliché de la première page (4) ou d'au moins une partie de la première page (4) et d'une deuxième page (5) du document à vérifier (3).

9. Procédé informatisé selon l'une des revendications précédentes, comprenant en outre une étape consistant à recevoir, sur le premier client, des informations sur l'avancement du processus de vérification du côté du modérateur.

10. Procédé informatisé pour organiser une session de collaboration virtuelle en temps réel avec au moins un participant en train de vérifier un document à vérifier (3) sur un premier client et un modérateur fournissant le contenu du document à vérifier (3) sur un second client, le premier et le second clients étant connectés l'un à l'autre par un réseau de communication, le procédé comprenant les étapes suivantes :

    - afficher, sur un deuxième dispositif d'affichage (2') connecté au deuxième client ou faisant partie de celui-ci, le premier contenu (8) du document à vérifier (3) ;
    - recevoir et afficher, sur le second client via le réseau de communication, une information du premier client relative à un rythme de lecture détecté du premier contenu (8) de l'au moins un participant vérifiant le document à vérifier (3) et
    - adapter chez le premier client le contenu du document à afficher et à vérifier (3) au rythme de lecture sur la base des informations reçues,

**caractérisée en ce que** le procédé comprend également une étape consistant à

    - calculer une valeur pour une perte d'attention de vérification représentant le rythme de lecture de l'au moins un participant, la perte d'attention de vérification étant calculée selon une formule

$$RAL = \frac{\sum_{n=0}^{x} Pourcentage\ de\ v\acute{e}rification\ effective - Pourcentage\ de\ v\acute{e}rification\ du\ participant}{x}$$

RAL étant un indicateur qui indique à quel niveau le au moins un participant est capable de suivre le rythme du processus de vérification et x étant un nombre de participants en retard dans le processus de vérification.

11. Système de collaboration sur le web pour la vérification d'un document (3) dans une session de collaboration virtuelle en temps réel selon l'une des revendications précédentes, dans lequel au moins un premier client est équipé d'un premier dispositif d'affichage (2) pour afficher le contenu du document à vérifier (3) à un premier participant, et un deuxième client est équipé pour présenter le document à vérifier (3) par un modérateur de la session de collaboration, le premier et le deuxième client étant connectés l'un à l'autre via un réseau de communication, le système calculant un pourcentage de perte d'attention lors de la vérificiation (RAL) sur la base de la formule suivante

$$RAL = \frac{\sum_{n=0}^{x} Pourcentage\ de\ v\acute{e}rification\ effective - Pourcentage\ de\ v\acute{e}rification\ du\ participant}{x}$$

RAL étant un indicateur qui indique à quel niveau le au moins un participant est capable de suivre le rythme du processus de vérification et x étant un nombre de participants en retard dans le processus de vérification.

12. Système de collaboration sur le web selon la revendication 11, comprenant un détecteur de rythme de lecture, en particulier des moyens de suivi des yeux.

2

1

Web collaboration tool

3, 4

Lorem Ipsum

Lorem ipsum dolor sit amet, consectetur adipiscing elit. Curabitur libero ipsum, cursus et turpis at, porttitor euismod lorem. Mauris lobortis ut felis sed finibus. Maecenas id tristique felis, at vulputate diam. Nullam rhoncus elit ac molestie aliquam. Pellentesque elit lectus, tempus non libero at, mollis volutpat orci. Ut elementum eros sed purus consequat, eu suscipit neque condimentum. Curabitur sed nisi vitae dolor aliquam cursus in in lectus.

7

6

3, 5

Aliquam aliquam lacus ut neque aliquam mattis. Nam eu commodo neque, ut dapibus quam. Mauris mattis risus magna, commodo

Fig. 1A

12

Fig. 1B

2

9

1

10

Web collaboration tool

3, 4

6

8

## Lorem Ipsum

Lorem ipsum dolor sit amet, consectetur adipiscing elit. Curabitur libero ipsum, cursus et turpis at, porttitor euismod lorem. Mauris lobortis ut felis sed finibus. Maecenas id tristique felis, at vulputate diam. Nullam rhoncus elit ac molestie aliquam. Pellentesque elit lectus, tempus non libero at, mollis volutpat orci. Ut elementum eros sed purus consequat, eu suscipit neque condimentum. Curabitur sed nisi vitae dolor aliquam cursus in in lectus.

Aliquam aliquam lacus ut neque aliquam mattis. Nam eu commodo neque, ut dapibus quam. Mauris mattis risus magna, commodo

3, 5

## Lorem Ipsum

Lorem ipsum dolor sit amet, consectetur adipiscing elit. Curabitur libero ipsum, cursus et turpis at, porttitor euismod lorem. Mauris lobortis ut felis sed finibus. Maecenas id tristique felis, at vulputate diam. Nullam rhoncus elit ac molestie aliquam. Pellentesque elit lectus, tempus non libero at, mollis volutpat orci. Ut elementum eros sed purus consequat, eu suscipit neque condimentum. Curabitur sed nisi vitae dolor aliquam cursus in in lectus.

## Lorem Ipsum

Lorem ipsum dolor sit amet, consectetur adipiscing elit. Curabitur libero ipsum, cursus et turpis at, porttitor euismod lorem. Mauris lobortis ut felis sed finibus. Maecenas id tristique felis, at vulputate diam. Nullam rhoncus elit ac molestie aliquam. Pellentesque elit lectus, tempus non libero at, mollis volutpat orci. Ut elementum eros sed purus consequat, eu suscipit neque condimentum. Curabitur sed nisi vitae dolor aliquam cursus in in lectus.

Fig. 1C

Fig. 3

**EP 3 949 304 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016018888 A1
- US 2015346937 A1